# EUROPEAN PATENT APPLICATION

(11) **EP 4 071 266 A1**
(43) Date of publication of application: **12.10.2022**
(21) Application number: 21167249.8
(22) Date of filing: 07.04.2021
(51) Int. Cl.: C23C 4/11, C23C 4/129, C23C 4/134

(54) **SUSPENSION FOR THERMAL SPRAY COATINGS**

(71) Applicant: Treibacher Industrie AG, 9330 Treibach-Althofen (AT)
(72) Inventor: Garabne-Abraham, Nora, 9020 Klagenfurt (AT); Curry, Nicholas, 5662 Bruck an der Großglocknerstraße (AT); Trache, Richard, 9020 Klagenfurt (AT)
(74) Representative: Schwarz & Partner Patentanwälte GmbH

(57) **Abstract**

The present invention relates to a suspension for suspension thermal spraying, comprising solid ceramic particles having an average particle size of 2 µm or below and a liquid phase comprising an organic solvent, characterized in that said suspension has a flashpoint of at least 60 °C, preferably at least 65 °C, and at most 400 °C, preferably at most 300 °C.

## Description

The invention relates to a suspension for suspension thermal spraying.

### Background of the invention

Suspension thermal spraying, for example suspension plasma spraying, has become an emerging technology for producing coatings.

In suspension thermal spraying, the suspension is injected into a thermal spray jet of hot and high-speed plasma gas or flame, in which it is atomized into smaller droplets. Then, the liquid vaporizes while the original solid particles agglomerate and thereby increase in size. The spray particles melt in the hot plasma gas or flame and are accelerated towards the surface to be coated. By impacting on the cold and solid surface, the spray particles are flattened into so called splats, cool down, solidify and form the thermally sprayed coating.

Depending on the suspension properties (e.g. viscosity, surface tension, particle size, solids loading), columnar or dense coatings are formed by suspension thermal spraying. Suspension thermal spraying is particularly useful for producing thermal barrier coatings (TBC). TBCs are applied in industrial gas turbines or aero turbines as thermal insulating layer to protect the metal components at high temperature operating conditions. Suspension plasma sprayed (SPS) yttria stabilized zirconia (YSZ) show favorable properties compared to other standard coating methods in this field, i.e. air plasma spraying (APS) or the electron beam physical vapor deposition (EB-PVD), which are based on solid feedstocks. Columnar structured SPS coatings show high strain tolerance (which is advantageous for high cyclic lifetime), low thermal conductivity, and better erosion resistance than APS coatings. The lower cost of processing the SPS TBC coatings makes this technique a promising alternative to EB-PVD

Methods for suspension plasma spraying to manufacture thermal barrier coatings are disclosed in US 2006/0222777 A1, EP 2 754 727 A1 and US 2013/0224453 A1. US 2019/0017177 A1 discloses multi-layer thermal barrier coatings formed by suspension plasma spraying, said coatings comprising rare earth oxides.

VanEvery et al. (Journal of Thermal Spray Technology, 2011, 20 (4), 817-828) discusses the influence of the suspension droplet size and depositing particle size on the coating microstructure. Small depositing particles with low inertia follow the gas jet near the substrate and are deposited with an impact angle not perpendicular to the substrate plane and columnar structures (defects) are formed. On the contrary, large depositing particles with high inertia keep their trajectory and impact with an angle close to 90° towards the coating surface and form a dense microstructure. Typically, when starting from the same suspension droplet size, small depositing particles are formed if the suspension contains small solid particles at a low concentration, while large depositing particles are formed if the suspension contains large particles or small particles at high concentration.

Further background on the coating formation is disclosed by L. Pawlowski, Surface & Coatings Technology 2009, 203 (19), 2807-2829. Curry et al. (Coatings, 2015, 5, 338-356) discloses that suspension droplet size is controlled by suspension properties, especially by the viscosity, surface tension and density (solids loading) of the suspension.

For several applications, in particular thermal barrier coatings, a small suspension droplet size is desired, resulting in a small depositing particle size and thus in coatings with a columnar microstructure. In order to minimize the size of the suspension droplet and therefore the depositing ceramic particle, the suspension viscosity and surface tension should be minimized. A small particle size, e.g. below 1 µm is also favorable.

Further prior art is disclosed by Kitamura et al., Journal of Thermal Spray Technology, 2011, 20 (1-2), 170-185 and Aghasibeig et al., Journal of Thermal Spray Technology, 2019, 28, 1579-1605.

Current state of art suspensions for thermal spraying are mainly based on low-molecular-weight alcohols or water as a solvent. US 2019/0242001 A1 (paragraph [0099]) discloses suspensions based on aliphatic C₁ to C₅ alcohols.

Low-molecular-weight alcohols such as ethanol or isopropanol have low viscosity and low surface tension, making them easy to atomize in the plasma stream to achieve fine spray particles, but are classified as highly flammable and/or explosive and therefore have restrictions on their transportation, storage and handling.

From a handling and transportation perspective, water based suspensions are ideal in that they have no specific safety regulations for their handling. Their main disadvantage is that water requires high-energy input for evaporation (approximately 2.2 times that of ethanol). Furthermore, water provides no additional energy to the spray process, in contrast to suspensions based on alcohols that release thermal energy by combustion. Thus, water-based suspensions are typically not used for producing columnar coatings.

### Short description of the invention

It is the object of the present invention to provide a suspension formulation for suspension thermal spraying that overcomes the drawbacks of state-of-the art alcohol- and water-based formulations and shows both high processability and ease of handling, which suspension is particularly suitable for producing a coating, in particular a coating with a columnar microstructure, by suspension plasma spraying.

The object is solved by a suspension for suspension thermal spraying comprising solid ceramic particles having an average particle size of 2 µm or below and a liquid phase comprising an organic solvent, characterized in that said suspension has a flashpoint of at least 60 °C. Preferably, the flashpoint is at least 65 °C, and at most 400 °C, preferably at most 300 °C.

It was found that the use of organic solvents having a flashpoint of at least 60 °C combines the advantages of easy atomization, combustibility and non-flammability and non-explosiveness, allowing safe transport, storage and handling at the same time as resulting in the desired products/coatings.

It has surprisingly been found that the inventive suspension is particularly useful to produce thermal barrier coatings with a columnar microstructure.

### Short description of the figures

Fig. 1 shows a SEM BSE image of the polished cross section of the coating obtained in Example 1 displaying a columnar coating structure (magnification: 150x, accelerating voltage: 15 kV, working distance (WD): 10.0 mm).
Fig. 2 shows a SEM BSE image of the polished cross section of the coating obtained in Example 2 displaying a columnar coating structure (magnification: 150x, accelerating voltage: 15 kV, WD: 9.6 mm).
Fig. 3 shows a SEM BSE image of the polished cross section of the coating obtained in Comparative Example 1 with a state-of-the-art ethanol-based suspension displaying a columnar coating structure (magnification: 150x, accelerating voltage: 15 kV, WD: 7.1 mm).
Fig. 4 shows a SEM BSE image of the polished cross section of the coating obtained in Comparative Example 2 with a state-of-the-art water-based suspension displaying a dense coating with vertical cracks (magnification: 150x, accelerating voltage: 15 kV, WD: 10.5 mm).

### Detailed description of the invention

The present invention provides in a first aspect a suspension for suspension thermal spraying comprising solid ceramic particles having an average particle size of 2 µm or below, and a liquid phase comprising an organic solvent, characterized in that said suspension has a flashpoint of at least 60 °C, preferably at least 65 °C, and at most 400 °C, preferably at most 300 °C.

In a second aspect, the present invention provides the use of said suspension for suspension thermal spraying, in particular suspension plasma spraying.

The following disclosure applies similarly to said first aspect and said second aspect.

As used herein, the term "suspension thermal spraying" refers to the use of a suspension as a feedstock in a thermal spraying processes, including plasma spraying (such as atmospheric plasma spraying and low pressure plasma spraying), high-velocity oxy-fuel spraying, high-velocity air-fuel spraying, flame spraying, cold spraying, laser spraying or laser cladding. Preferably, the suspension according to the present invention is used in suspension plasma spraying and low pressure plasma spraying and high velocity oxy fuel spraying, most preferably in suspension plasma spraying, specifically in atmospheric suspension plasma spraying.

The term "average particle size" as used herein refers to the d50 value as determined from the particle size distribution. The d50 value is known as median diameter or medium value of the particle size distribution, being determined from a volume based representation (dv50) or from a number based representation (dn50). In the present application, the d50 value refers to the volume based representation, i.e. the particle diameter at 50 vol% in the cumulative distribution (e.g. a d50 of 2 µm means that 50 vol% of the particles have a smaller diameter than 2 µm).

The solid ceramic particles according to the present invention have an average particle size of 2 µm or below, preferably of 1 µm or below. In particularly preferred embodiments, said particles have an average particle size between 0.2 µm and 0.8 µm, preferably between 0.4 µm and 0.6 µm.

According to the present invention, the particle size distribution is preferably determined using laser diffraction particle analysis, preferably using a "Microtrac" particle analyser, such as a Microtrac S3500 or a Microtrac XI00 instrument, employing the Fraunhofer analysis mode (measurement mode: full range analysis (FRA) of absorbing particles). The term "full range analysis" refers to the determination of the particle size over the whole measurement range of the instrument and the term "absorbing particles" refers to particles which do not transmit light.

Other instruments showing a sensitivity and measurement range comparable to the Microtrac S3500 or Microtrac X100, in particular a comparable lower limit of the detectable particle size and a comparable sensitivity in the lower size region, may be employed to determine the particle size distribution according to the present invention. The skilled person is aware of suitable instruments on the market.

The suspension of the present invention consists of a liquid phase and a solid phase. The liquid phase comprises an organic solvent. The solid phase comprises the solid ceramic particles described herein. The solid phase does not contain any other solid ceramic particles.

The organic solvent is the main component of the liquid phase and is present at an amount of at least 75 wt%, preferably at least 90 wt%, most preferably at least 98 wt%, relative to the overall amount of liquid components in the liquid phase. Further liquid components of the liquid phase may comprise one or more dispersing agents.

Preferably, the liquid phase is substantially free of water. However, the liquid phase may also comprise small amounts of water, e.g. water in an amount of up to 20 wt%, preferably up to 10 wt%. For example, an organic solvent comprising small amounts of water may be employed.

The term "flash point" refers to the lowest temperature at which vapors of the suspension ignite if given an ignition source. In the present invention, the flash point of the suspension is determined according to the DIN EN ISO 2719 Pensky-Martens closed cup method.

As the requirements in industry for safe and easy-to-handle feedstocks are increasing, it is desirable to avoid flammable liquids with a flash point below 60 °C, such as C₁-C₅ alcohols including ethanol or isopropanol.

The flash point of the inventive suspension is determined by the liquid phase of the suspension. Specifically, the liquid phase of the inventive suspension (including the organic solvent and any further liquids such as dispersing agents) has a flash point of at least 60 °C, preferably at least 65 °C, or 70 °C or 75 °C, or 80 °C, or 90 °C, or 100 °C, or higher and at most 400 °C, preferably at most 300 °C.

As the organic solvent is the main component of the liquid phase of the suspension, also the organic solvent has preferably a flash point of at least 60 °C, preferably at least 65 °C, or 70 °C or 75 °C, or 80 °C, or 90 °C, or 100 °C, or higher and at most 400 °C, preferably at most 300 °C.

Thus, the suspension according to the present invention is non-flammable and non-explosive.

The suspension according to the present invention is particularly suitable for producing a thermal barrier coating with a columnar microstructure. The term "columnar microstructure", refers to a structure having, at the micrometric scale, a preferred orientation of elementary bricks in the direction of the thickness of the layer, wherein these bricks are organized in the form of columns.

It is believed that the use of fine solid ceramic particles with an average particle size of 2 µm or below, preferably of 1 µm or below, contributes to the formation of columnar microstructures when the inventive suspension is used for suspension plasma spraying, since suspensions with particles of this size form small depositing particles, which experience strong plasma drag close to the substrate, leading to a large number of depositing particles arriving at the substrate at an oblique angle (see VanEvery et al., Journal of Thermal Spray Technology, 2011, 20 (4), 817-828). Particles with an average particle size between 0.2 µm and 0.8 µm, preferably 0.4 µm and 0.6 µm are particularly preferred for obtaining columnar microstructures when using the inventive suspension for suspension thermal spraying, preferably suspension plasma spraying.

Furthermore, the preferred organic solvents described herein allow to obtain a suspension that has low viscosity and low surface tension, allowing for fast atomization in the plasma stream, thus resulting in fine spray particles, which create a columnar microstructure.

Preferably, the suspension according to the present invention has a viscosity at a shear rate of 100-1000 s⁻¹ of below 50 mPa*s, preferably below 30 mPa*s, even more preferably below 20 mPa*s, even more preferably below 10 mPa*s.

According to a preferred embodiment of the present invention, said organic solvent is selected from the group consisting of alcohols, ketones, esters, glycols, glycol ethers, glycol ether esters or hydrocarbons and any combination thereof. The organic solvent may be a single solvent or a combination of at least two, three, four or five organic solvents

In one embodiment, the organic solvent comprises a C₆-C₁₅ monoalcohol, preferably a C₆-C₉ monoalcohol. Surprisingly, it was found that a C₆-C₁₅ monoalcohol can be used as a solvent instead of low-molecular weight alcohols such as ethanol in suspensions for thermal spraying. This allows the straightforward production of thermal barrier coatings with columnar microstructures from a suspension which is non-flammable and non-explosive and thus easy to handle.

The C₆-C₁₅ monoalcohol may have a linear or branched aliphatic chain. Preferably, said C₆-C₁₅ monoalcohol is selected from the group consisting of 1-hexanol, 1-heptanol, 1-octanol 2-ethylhexanol and any combination thereof. In a particular embodiment, the organic solvent consists of a C₆-C₁₅ monoalcohol.

In another embodiment, said organic solvent comprises a glycol or glycol ether. It was found that a glycol or glycol ether is a suitable non-flammable and non-explosive solvent for suspensions for thermal spraying, especially for producing thermal barrier coatings with columnar microstructures.

Preferably, said glycol is selected from the group consisting of ethylene glycol, propylene glycol, butylene glycol and diethylene glycol.

Preferably, said glycol ether is selected from the group consisting of diethylene glycol monobutyl ether, ethylene glycol monomethyl ether, ethylene glycol monobutyl ether, diethylene glycol monoethyl ether, diethylene glycol diethyl ether, dipropylene glycol monomethyl ether, propylene glycol methyl ether, propylene glycol n-propyl ether, propylene glycol n-butyl ether, and any combination thereof.

In a preferred embodiment, said organic solvent comprises or consists of diethylene glycol monobutyl ether, which is also referred to as "butyl diglycol".

In one aspect of the present invention, the organic solvent comprises or consists of a mixture of a C₆-C₁₅ monoalcohol, preferably a C₆-C₉ monoalcohol, and a glycol.

In a specific embodiment, said C₆-C₁₅ monoalcohol is 1-hexanol and said glycol is ethylene glycol.

The weight ratio of the C₆-C₁₅ monoalcohol to the glycol may range from 1:1 w/w to 40:1 w/w, preferably from 5:1 to 30:1, or from 10:1 to 30:1 or from 14:1 to 24:1.

In a preferred embodiment, the concentration of said solid ceramic particles in the inventive suspension ranges from 5 wt% to 95 wt%, preferably from 20 wt% to 70 wt%, even more preferably from 25 wt% to 50 wt% or from 20 wt% to 30 wt%. The concentration of solid ceramic particles is also referred to as the "solids loading" of the suspension.

The concentration of said organic solvent may range from 95 wt% to 5 wt%, preferably from 80 wt% to 30 wt%, even more preferably from 75 wt% to 50 wt%.

For example, the inventive suspension may contain said solid ceramic particles at a concentration of 20 to 30 wt%, for example 25 wt%, and said organic solvent at a concentration of 80 to 70 wt%, for example 75 wt%. If the solvent consists of a mixture of a C₆-C₁₅ monoalcohol and a glycol, the weight ratio of the C₆-C₁₅ monoalcohol is as described above. For example, if the suspension comprises 75 wt% of the organic solvent, the concentration of the C₆-C₁₅ monoalcohol, e.g. 1-hexanol, may range from 37.5 wt% to 73 wt% (corresponding to a weight ratio of the C₆-C₁₅ monoalcohol to the glycol of 1:1 to 1:40), for example from 70 wt % to 72 wt% (corresponding to a weight ratio of the C₆-C₁₅ monoalcohol to the glycol of 1:14 to 1:24).

In one embodiment said solid ceramic particles comprise or consist of at least one oxide of a transition metal, a rare earth metal, a metal of group 13 or 14 of the periodic table and any combination thereof.

The term "transition metal" as used herein refers to a transition metal element or a mixture thereof, i.e. more than one transition metal element. According to IUPAC, a transition metal is an element whose atom has an incomplete d sub-shell, or which can give rise to cations with an incomplete d sub-shell. However, for the purpose of the present specification and claims, the term "transition metal" shall only comprise the elements of groups 4-11 on the periodic table and Zn.

The term "rare earth metal" as used herein refers to the group of 17 chemically similar metallic elements including the lanthanides, yttrium and scandium. The lanthanides are defined as the series of elements with atomic numbers 57 to 71, all of which, except promethium, occur in nature (Extractive Metallurgy of Rare Earths, C. K. Gupta, N. Krishnamurthy, CRC).

If said solid ceramic particles comprise or consist of an oxide of a transition metal, said oxide is preferably selected from the group consisting of zirconium oxide (zirconia, ZrO₂), titanium oxide (titania, TiOx with x preferably being 1.6 to 2, even more preferably with x being 1.6 to 1.9, or 2, i.e. TiO₂) and chromium (III) oxide (chromia, Cr₂O₃).

Said zirconium oxide may be further stabilized or blended with one or more rare earth metal oxides, such as yttrium oxide (yttria, Y₂O₃) or gadolinium oxide (gadolinia, Gd₂O₃).

Thus, the solid ceramic particles used in the inventive suspension may comprise or consist of yttria-stabilized zirconia (YSZ). The amount of yttrium oxide in the YSZ may range from 1-70 wt% Y₂O₃, preferably 3-9 wt% Y₂O₃, and most preferably 7-9 wt% Y₂O₃. The solid ceramic particles used in the inventive suspension may further comprise or consist of gadolinium zirconate (Gd₂Zr₂O₇), which may also be referred to as "gadolinia stabilized zirconium oxide".

Said solid ceramic particles may also entirely consist of an oxide of a rare earth metal, such as yttrium oxide.

If said solid ceramic particles comprise or consist of an oxide of a metal of group 13 of the periodic table, said oxide is preferably aluminium oxide (alumina, Al₂O₃).

If said solid ceramic particles comprise or consist of an oxide of a metal of group 14 of the periodic table, said oxide is preferably a silicate mineral comprising silicon dioxide (silica, SiO₂), for example aluminium silicate such as mullite (3Al₂O₃·2SiO₂).

In particularly preferred embodiments, said solid ceramic particles are selected from the group consisting of yttrium-stabilized zirconia (YSZ), zirconium oxide (ZrO₂), yttrium oxide (Y₂O₃) gadolinium-zirconate (Gd₂Zr₂O₇), chromium (III) oxide (Cr₂O₃), aluminium oxide (Al₂O₃), aluminium silicate, preferably mullite (3Al₂O₃·2SiO₂), titanium oxide (TiOₓ, wherein x preferably ranges from 1.6 to 2), and mixtures and/or composites thereof.

In one aspect, the suspension according to the present invention further comprises a dispersing agent. The dispersing agent may be any chemical compound suitable for stabilizing a suspension for thermal spraying. The dispersing agent ensures that the particles remain well dispersed and do not form large agglomerates or sediment. The dispersing agent may for example be a polymeric salt, and inorganic salt or an organic molecule.

Examples of suitable dispersing agents are 2-[2-(2-methoxyethoxy) ethoxy] acetic acid (MEEA), 2-amino-2-methylpropanol (such as AMP 90^{™} and AMP 95^{™}), ammonium polycarboxylate, polyacrylic acid, polyethyleneimine, sodium metaphosphate, sodium tetraborate, triethanolamine, TRITON X-100^{™}, Lopon^{®} 888 sodium bicarbonate and citric acid. A particularly preferred dispersing agent is 2-[2-(2-methoxyethoxy) ethoxy] acetic acid (MEEA).

The present invention is however not limited to this exemplary list of dispersing agents. The skilled person is aware of suitable dispersing agents for each type of solid ceramic particles.

The concentration of the dispersing agent is chosen in order to provide a homogeneous stable suspension and to lower the viscosity and shear forces needed for atomization, said concentration depending on the concentration of solid ceramic particles in the suspension. The concentration of the dispersing agent may range from 0.1 wt% to 10 wt%, preferably from 0.2 wt% to 5 wt%, even more preferably from 0.4 wt% to 2 wt% relative to the content of solid ceramic particles.

The suspension according to the present invention may optionally further contain a binder.

The inventive suspension can be used for producing a thermal barrier coating with a columnar microstructure by suspension thermal spraying, preferably by suspension plasma spraying. The skilled person is aware of suitable thermal spray parameters for obtaining a columnar microstructure.

According to the present invention, a thermal barrier coating can be produced on any suitable substrate, such as a metal, a ceramic, a polymer, a ceramic matrix composite, a metal alloy or mixtures or composites thereof. The term "ceramic matrix composite" refers to a composite material comprising ceramic fibers embedded in a ceramic matrix. For example, the substrate may consist of steel, preferably stainless steel, aluminium, or a superalloy.

In a particular embodiment, the suspension according to the present invention can be used for producing a thermal barrier coating, wherein the thermal barrier coating has a thickness between 50 µm and 1000 µm, preferably between 100 µm and 400 µm.

The suspension according to the present invention can be produced by dispersing a solid ceramic raw material in a solvent as described herein and milling the suspension until the desired average particle size (d50) is obtained. Milling is performed optionally in the presence of a dispersing agent as described herein. Afterwards, the suspension is diluted to the desired solids concentration.

The present invention will now be explained in more detail in the following examples and comparative examples, without being limited thereto.

### Examples

### Example 1

YSZ particles (8 wt% Y₂O₃ stabilized ZrO₂, Treibacher Industrie AG) with an average particle size (d50) of 23.0 µm were used as raw material for the suspension. 3.0 kg YSZ raw material was dispersed in 1 kg of 1-Hexanol (99%, Alfa Aesar) solvent to form a 75 wt% suspension. A dispersing agent MEEA (2-(2-methoxyethoxy)ethoxy acetic acid) (Amri Global) was added to decrease the viscosity of the raw material suspension and to enable wet milling. Dispersing agent was added in an amount of 0.8 wt% relative to the oxide content. The oxide material was wet milled in a WAB Dyno-Mill Multilab High energy wet mill until the average particle size (d50) of the ceramic particles in the suspension was 0.385 µm. The milled suspension was sieved through a 32 µm mesh size sieve without additional pressure to ensure no oversize particles or debris is present in the final suspension. The thermal spray suspensions were prepared by diluting the high solid content suspensions after milling with the selected solvents to 25 wt% solids load. The suspension milled in 1-hexanol at 75 wt% was diluted with 1-hexanol and ethylene glycol to achieve a final composition as follows: 24.86 wt% YSZ, 0.20 wt% dispersing agent MEEA, 71.19 wt%, 1-hexanol, 3.75 wt% ethylene glycol.

The sample for measuring the particle size was prepared by diluting 10 ml of the suspension with 10 ml of deionized water and mixing with 5 droplets of a 5 wt% TSPP dispersant (Sodium pyrophosphate tetrabasic) by hand for one minute. A few droplets of the so prepared sample were used for the measurement. The equipment used was a Microtrac S3500. Before starting the measurement additional 5 droplets of a 5 wt% TSPP dispersant were put into the measurement chamber (analysis mode: Fraunhofer, measurement mode: "FRA" (Full Range Analysis), particle transparency: absorbing). The following parameters were used: Refractive index for water of 1.33, flow rate of 45% and an internal ultrasonic power of 40 watts for 120 second.

Viscosity of the suspension is 5.6 mPa.s at 1000 1/s shear rate measured by the Anton Paar Physica MCR 301 rotational rheometer equipped with a plate-plate system. The flash point of the suspension was 68.0°C ± 1 °C, as measured by the Pensky-Martens closed cup device according to the DIN EN ISO 2719 standard.

This suspension was used in a suspension plasma spray process as feedstock material. The suspension was fed into a spray torch (Axial III^{™}, Northwest Mettech) using as suspension feeder (NanoFeeder^{™}, Northwest Mettech). The spray torch was operated with an Argon-Nitrogen-Hydrogen plasma gas composition with a flowrate of 300 standard liters per minute at a power setting of 127 kW and a plasma enthalpy of 16.9 kJ/L Coatings were deposited on stainless steel samples with a diameter of 25.4 mm and a thickness of 5 mm. Before deposition, samples were grit blasted to prepare the surface with Grit 220 alumina blast media to a surface roughness of Ra 1.5 µm ± 0.5 measured with a surface profilometer (MarSurf PS 10, Mahr, Germany).

The suspension flow rate for the coating deposition was 100 ml/min and the standoff distance (torch nozzle exit to substrate surface) was 100 mm. The suspension density was 1.052 g/ml at 24.86% solids load (determined by gravimetric method with a graduated cylinder and a laboratory scale), equating to 26.15 g of oxide powder per minute feeding rate.

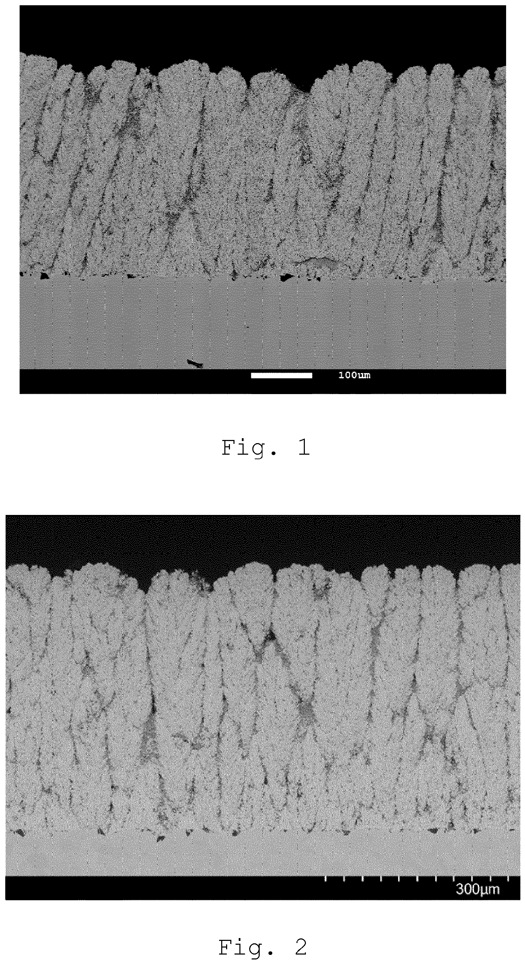

A columnar microstructure was obtained as shown in the SEM BSE image of a polished cross section of the coating (Fig. 1). The coating cross section was embedded in epoxy resin under vacuum und then grinded with SiC grinding paper and polished with diamond suspension until a mirror polished surface finish was achieved.

### Example 2

YSZ particles (8 wt% Y₂O₃ stabilized ZrO₂, Treibacher Industrie AG) with an average particle size (d50) of 23.0 µm was used as raw material for the suspension. 3 kg of YSZ powder raw material was dispersed in butyl diglycol (>98%, Sigma Aldrich) to form a 75 wt% suspension. The dispersing agent MEEA (2-(2-methoxyethoxy)ethoxy acetic acid) (Amri Global) was added to decrease the viscosity of the raw material suspension and to enable wet milling. Dispersing agent was added in an amount of 1.43 wt% relative to the oxide content. The oxide material was wet milled on a WAB Dyno-Mill Multilab High energy wet mill to obtain the average particle size (d50) of 0.404 µm, determined with the same method as described in Example 1. The milled suspension was sieved through a 32 µm mesh size sieve without additional pressure to ensure no oversize particles or debris is present in the final suspension. The suspension milled in butyl diglycol at 75.2 wt% was further diluted with butyl-diglycol to achieve a final composition as follows: 25.35 wt% YSZ, 0.36 wt% dispersing agent MEEA, 74.29 wt% butyl diglycol.

Viscosity of the suspension is 6.8 mPa.s at 1000 1/s shear rate, obtained with the same method as in Example 1. The flash point of the suspension is 110.0°C ± 1°C measured by the Pensky-Martens closed cup device according to the DIN EN ISO 2719 standard.

This suspension was used in a suspension plasma spray process as feedstock material. The suspension was feed into a spray torch (Axial III^{™}, Northwest Mettech) using as suspension feeder (NanoFeeder^{™}, Northwest Mettech). The spray torch was operated with an Argon-Nitrogen-Hydrogen plasma gas composition with a flowrate of 300 standard liters per minute at a power setting of 127 kW and a plasma enthalpy of 16.9 kJ/L Coatings were deposited on stainless steel samples with a diameter of 25.4 mm and a thickness of 5 mm. Before deposition, samples were grit blasted to prepare the surface with Grit 220 alumina blast media to a surface roughness of Ra 1.5 µm ± 0.5 measured with a surface profilometer (MarSurf PS 10, Mahr, Germany)

Suspension flow rate for coating deposition was 100 ml/min and the standoff distance (torch nozzle exit to substrate surface) was 100 mm. The suspension density was 1.206 g/ml at 25.35% solids load (determined with the same method as in Example 1), equating to 30.6 g of oxide powder per minute feeding rate.

A coating with a columnar microstructure was obtained as shown in the SEM BSE image of the polished cross section prepared with the same method as described in Example 1 (Fig. 2).

### Comparative example 1

A commercially available stable suspension feedstock for thermal spraying, was used to compare the performance of the present inventive suspension. The suspension contained YSZ particles (8 wt% Y₂O₃) with an average size d50 0.58µm (determined by the same method as described in Example 1,) at a concentration of 25.2 wt% and is based on a technical grade ethanol (ethanol 95-99%) used as solvent liquid.

The viscosity of the suspension was 1.6 mPa.s at 1000 1/s shear rate obtained with the same method as described in Example 1, and the flash point is 16.5°C ± 1°C measured with the same method as described in Example 1.

This suspension was used in a suspension plasma spray process as feedstock material. The suspension was feed into a spray torch (Axial III^{™}, Northwest Mettech) using as suspension feeder (NanoFeeder^{™}, Northwest Mettech). The spray torch was operated with an Argon-Nitrogen-Hydrogen plasma gas composition with a flowrate of 300 standard liters per minute at a power setting of 127 kW and plasma enthalpy of 16.9 kJ/L Coatings were deposited on stainless steel samples with a diameter of 25.4 mm and a thickness of 5 mm. Before deposition, samples were grit blasted to prepare the surface with Grit 220 alumina blast media to a surface roughness of Ra 1.5 µm ± 0.5 measured with a surface profilometer (MarSurf PS 10, Mahr, Germany).

Suspension flow rate for coating deposition was 100ml/min and the standoff distance (torch nozzle exit to substrate surface) was 100 mm. The suspension density was 1.028 g/ml at 25.2% solids load (determined with the same method as in Example 1), equating to 25.7g of oxide powder per minute feeding rate.

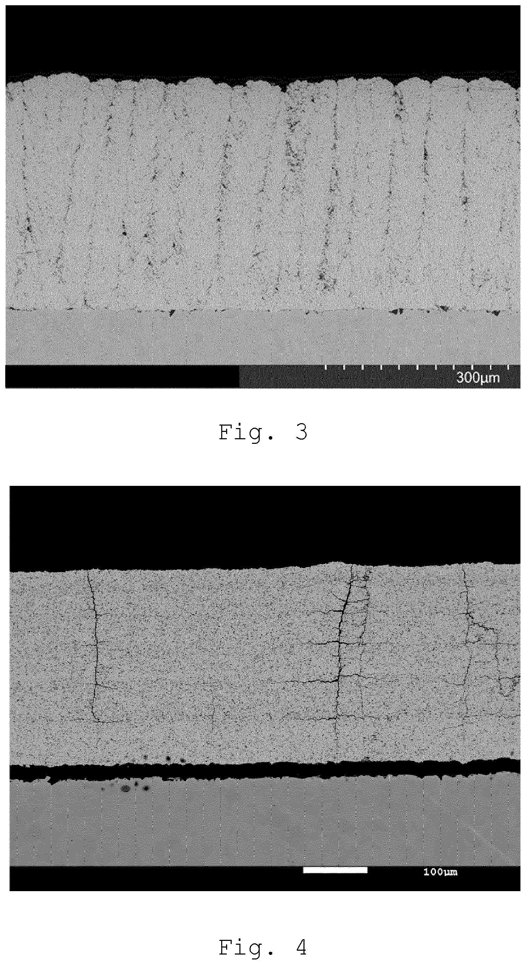

A coating with a columnar microstructure was obtained as shown in the SEM BSE image of the polished cross section prepared with the same method as described in Example 1 (Fig. 3).

### Comparative example 2

A commercially available stable suspension feedstock for thermal spraying was used to compare the performance of the present inventive suspension. The suspension contained YSZ particles (8 wt% Y₂O₃) with an average size d50 of 0.506 µm (determined by the same method as described in Example 1) at a concentration of 24.57 wt% and deionized water as solvent liquid.

The viscosity of the suspension was 1.15 mPa.s at 1000 1/s shear rate obtained with the same method as described in Example 1.

Due to the very low organic content of the water based suspension (<<1 wt%), it is not possible to ignite the suspension, therefore the suspension has no flash point.

This suspension was used in a suspension plasma spray process as feedstock material. The suspension was feed into a spray torch (Axial III^{™}, Northwest Mettech) using as suspension feeder (NanoFeeder^{™}, Northwest Mettech). The spray torch was operated with an Argon-Nitrogen-Hydrogen plasma gas composition with a flowrate of 300 standard liters per minute at a power setting of 139 kW and plasma enthalpy of 15 kJ/L Coatings were deposited on stainless steel samples 25.4 mm in diameter with a thickness of 5 mm. Before deposition, samples were grit blasted to prepare the surface with Grit 220 alumina blast media to a surface roughness of Ra 1.5 µm ± 0.5 measured with a surface profilometer (MarSurf PS 10, Mahr, Germany).

Suspension flow rate for coating deposition was 80ml/min and the standoff distance (torch nozzle exit to substrate surface) was 100 mm. The suspension density was 1.287 g/ml at 24.57 % solids load (determined with the same method as in Example 1), equating to 25.3 g of oxide powder per minute feeding rate.

A porous coating with some columnar features and vertical cracks was obtained as shown in the SEM BSE image of the polished cross section image prepared with the same method as described in Example 1 in Fig. 5.

## Claims

1. A suspension for suspension thermal spraying, comprising
a. solid ceramic particles having an average particle size of 2 µm or below; and
b. a liquid phase comprising an organic solvent,
**characterized in that** said suspension has a flashpoint of at least 60 °C, preferably at least 65 °C, and at most 400 °C, preferably at most 300 °C.

2. The suspension according to claim 1, wherein said organic solvent is selected from the group consisting of alcohols, ketones, esters, glycols, glycol ethers, glycol ether esters or hydrocarbons and any combination thereof.

3. The suspension according to claim 2, wherein said organic solvent comprises or consists of a C₆-C₁₅ monoalcohol, preferably a C₆-C₉ monoalcohol, preferably selected from the group consisting of 1-hexanol, 1-heptanol, 1-octanol, 2-ethylhexanol and any combination thereof.

4. The suspension according to claim 2, wherein said organic solvent comprises or consists of a glycol or glycol ether.

5. The suspension according to claim 4, wherein said glycol is selected from the group consisting of ethylene glycol, propylene glycol, butylene glycol and diethylene glycol.

6. The suspension according to claim 4, wherein said glycol ether is selected from the group consisting of diethylene glycol monobutyl ether, ethylene glycol monomethyl ether, ethylene glycol monobutyl ether, diethylene glycol monoethyl ether, diethylene glycol diethyl ether, dipropylene glycol monomethyl ether, propylene glycol methyl ether, propylene glycol n-propyl ether, propylene glycol n-butyl ether and any combination thereof, preferably said glycol ether is diethylene glycol monobutyl ether.

7. The suspension according to any one of claims 1 to 6, wherein said organic solvent comprises or consists of a mixture of a C₆-C₁₅ monoalcohol and a glycol.

8. The suspension according to claim 7, wherein said C₆-C₁₅ monoalcohol is 1-hexanol and said glycol is ethylene glycol.

9. The suspension according to claim 7 or 8, wherein the weight ratio of the C₆-C₁₅ monoalcohol to the glycol ranges from 1:1 w/w to 40:1 w/w.

10. The suspension according to any one of claims 1 to 9, wherein the concentration of said solid ceramic particles in said suspension ranges from 5 wt% to 95 wt%, preferably from 20 wt% to 70 wt%, even more preferably from 25 wt% to 50 wt%.

11. The suspension according to any one of claims 1 to 10, further comprising a dispersing agent.

12. The suspension according to any one of claims 1 to 11, wherein said solid ceramic particles comprise or consist of at least one oxide of a transition metal, a rare earth metal, a metal of group 13 or 14 of the periodic table and any combination thereof.

13. The suspension according to claim 12, wherein said solid ceramic solid particles are selected from the group consisting of yttrium-stabilized zirconia (YSZ), zirconium oxide (ZrO₂), yttrium oxide (Y₂O₃), gadolinium-zirconate (Gd₂Zr₂O₇), chromium (III) oxide (Cr₂O₃), aluminium oxide (Al₂O₃), aluminium silicate, preferably mullite (3Al₂O₃·2SiO₂), titanium oxide (TiOₓ, wherein x preferably ranges from 1.6 to 2), and mixtures and/or composites thereof.

14. The suspension according to any one of claims 1 to 13, wherein said solid ceramic particles have an average particle size between 0.2 µm and 0.8 µm, preferably between 0.4 µm and 0.6 µm.

15. The suspension according to any one of claims 1 to 14, wherein said suspension has a viscosity at a shear rate of 100-1000 s⁻¹ of below 50 mPa*s, preferably below 30 mPa*s, even more preferably below 20 mPa*s, even more preferably below 10 mPa*s.

16. Use of the suspension according to any one of claims 1 to 15 for suspension thermal spraying, preferably for suspension plasma spraying.

17. Use according to claim 16 for producing a thermal barrier coating on a substrate, wherein said substrate is selected from the group consisting of a metal, a ceramic, a polymer, a ceramic matrix composite, a metal alloy, and a mixture and/or composite thereof.
